# EUROPEAN PATENT APPLICATION

(11) **EP 2 845 967 A2**
(43) Date of publication of application: **11.03.2015**
(21) Application number: 14001501.7
(22) Date of filing: 28.04.2014
(51) Int. Cl.: E04G 9/05, E04G 11/12, E04G 13/02, E04G 17/06

(54) **Hollow-core fiberglass sheet**

(30) Priority: 28.04.2013 US 201361816779 P
(71) Applicant: Bergman, Robert, 1780 Manila (PH)
(72) Inventor: Bergman, Robert, 1780 Manila (PH)
(74) Representative: Marchau, Michel F.L.A.

(57) **Abstract**

A form work system is disclosed. The form work system may include a pair of fiberglass hollow-core sheets forming an internal cavity that receives concrete to form a structure. The pair of fiberglass hollow-core sheets includes a top fiberglass sheet and a bottom fiberglass sheet and a plurality of fiberglass vertical supports coupled between the top fiberglass sheet and the bottom fiberglass sheet to form a plurality of internal channels. The form work system rebar fasteners extend through the pair of vertical supports, the pair of fiberglass hollow-core sheets, the internal cavity and the concrete to form the form work system.

## Description

This application claims priority to U.S. Provisional Application 61/816,779 filed on April 28, 2013, the entire disclosure of which is incorporated by reference.

### BACKGROUND OF THE INVENTION

### FIELD OF THE INVENTION:

The present invention is a hollow-core sheet. More specifically, the present invention is a hollow-core fiberglass sheet.

### DESCRIPTION OF THE RELATED ART:

Plywood formwork system delaminates, breaks and needs to be replaced after five to fifty uses, depending on the quality of the plywood. Fiberglass sheet may be utilized up to five-hundred times before having to be replaced. Fiberglass sheet is non permeable to water and may last longer than plywood sheet.

### BRIEF SUMMARY OF THE INVENTION

The present invention is a hollow-core sheet. More specifically, the present invention is a hollow-core fiberglass sheet. It solves the problem of traditional less durable plywood sheet being utilized in concrete formwork.

The hollow-core fiberglass sheet includes fiberglass hollow-core sheet, a pair of fiberglass sheets including a top fiberglass sheet and a bottom fiberglass sheet and a plurality of fiberglass vertical supports coupled between the top fiberglass sheet and the bottom fiberglass sheet to form a plurality of internal channels.

The hollow-core fiberglass sheet is utilized in a form work system. The form work system includes a pair of fiberglass hollow-core sheets forming an internal cavity that receives concrete to form a structure, a plurality of cross-members coupled to the pair of fiberglass hollow-core sheets to support the pair of fiberglass hollow-core sheets and a pair of vertical supports coupled to the cross-members to further support the cross-members and the pair of fiberglass hollow-core sheets.

It is an object of the present invention to provide a hollow-core fiberglass sheet that may replace a plywood sheet on a formwork system.

It is an object of the present invention to provide a hollow-core fiberglass sheet that is lighter, cheaper to make, more durable and non-permeable to water than traditional plywood sheet on a formwork system.

It is an object of the present invention to provide a hollow-core fiberglass sheet that is screwed to a rigid frame work that forms a mold for a plurality of concrete to be received.

It is an object of the present invention to provide a hollow-core fiberglass sheet that is utilized on sites to form concrete structures such as buildings, dams, bridges, elevated roadways and power plants.

### BRIEF DESCRIPTION OF THE DRAWINGS

The present invention will be described by way of exemplary embodiments, but not limitations, illustrated in the accompanying drawings in which like references denote similar elements, and in which:
FIG. 1 illustrates a side cutaway environmental view of a form work system, in accordance with one embodiment of the present invention.
FIG. 2 illustrates an overhead view of a hollow-core fiberglass sheet, in accordance with one embodiment of the present invention.

### DETAILED DESCRIPTION OF ILLUSTRATIVE EMBODIMENTS

Various aspects of the illustrative embodiments will be described using terms commonly employed by those skilled in the art to convey the substance of their work to others skilled in the art. However, it will be apparent to those skilled in the art that the present invention may be practiced with only some of the described aspects. For purposes of explanation, specific numbers, materials and configurations are set forth in order to provide a thorough understanding of the illustrative embodiments. However, it will be apparent to one skilled in the art that the present invention may be practiced without the specific details. In other instances, well-known features are omitted or simplified in order not to obscure the illustrative embodiments.

Various operations will be described as multiple discrete operations, in turn, in a manner that is most helpful in understanding the present invention however the order of description should not be construed as to imply that these operations are necessarily order dependent. In particular, these operations need not be performed in the order of presentation.

The phrase "in one embodiment" is used repeatedly. The phrase generally does not refer to the same embodiment, however, it may. The terms "comprising", "having" and "including" are synonymous, unless the context dictates otherwise.

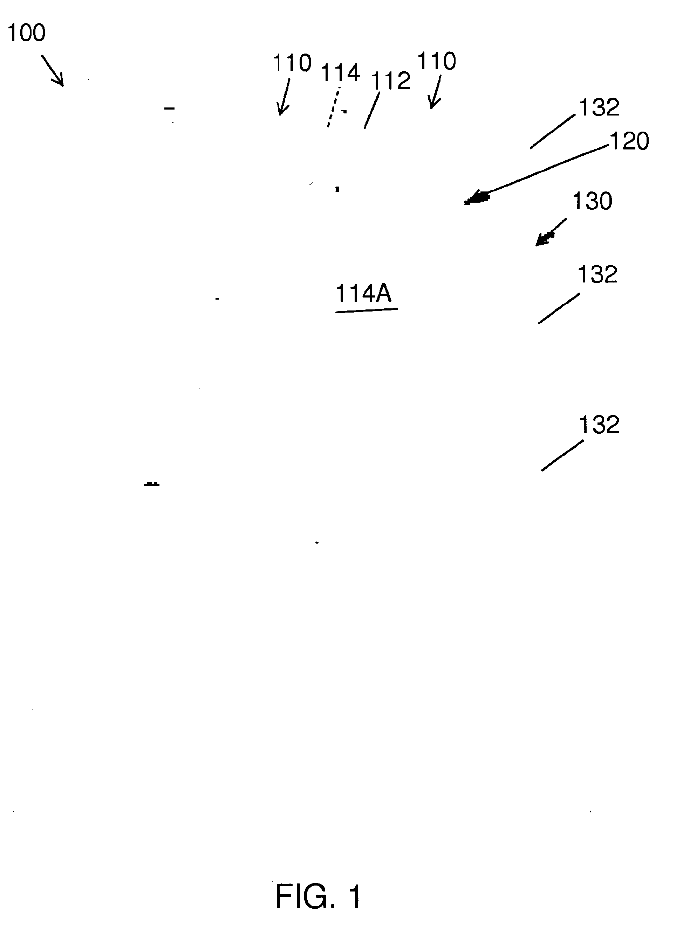

FIG. 1 illustrates a side cutaway environmental view of a form work system 100, in accordance with one embodiment of the present invention.

The form work system 100 may include a pair of hollow-core sheets 110, a plurality of cross-members 120 and a pair of vertical supports 130. The pair of hollow-core sheets 110 may form an internal cavity 112 that receives concrete or other suitable material to form a structure 114. The structure 114 may be a pillar 114A or other suitable structure. The pair of hollow-core sheets 110 may be made of glass-fiber reinforced plastic or FIBERGLASS® or other suitable material. The cross-members 120 may be coupled to the pair of hollow-core sheets 110 to support the pair of hollow-core sheets 110. The cross-members 120 may be made of a material selected from the group consisting of timber, steel, aluminum or other suitable material. The pair of vertical supports 130 may be coupled to the cross-members 120 to further support the cross-members 120 and the pair of hollow-core sheets 110. The pair of vertical supports 130 may be coupled to the pair of hollow-core sheets 110 with a plurality of rebar fasteners 132 or other suitable fasteners. The rebar fasteners 132 may extend through the pair of vertical supports 130, the pair of hollow-core sheets 110, the internal cavity 112 and the concrete to secure the pair of vertical supports 130, the pair of hollow-core sheets 110, the internal cavity 112, the cross-members 120 and the concrete to form the form work system 100. The pair of vertical supports 130 may be made of a material selected from the group consisting of timber, steel, aluminum or other suitable material.

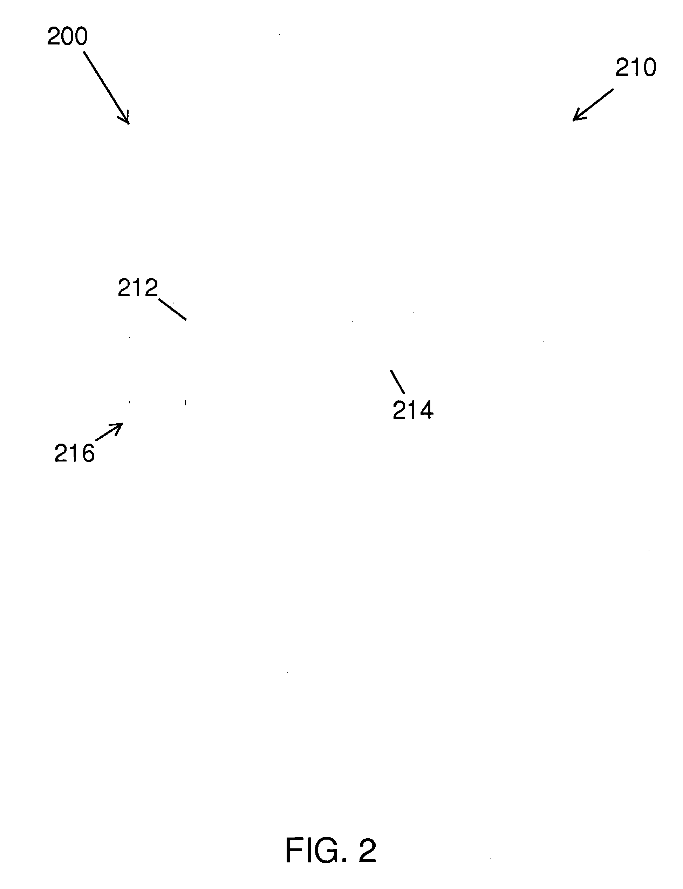

FIG. 2 illustrates an overhead view of a fiberglass hollow-core sheet 200, in accordance with one embodiment of the present invention.

The fiberglass hollow-core sheet 200 may include a pair of fiberglass sheets 210 and a plurality of fiberglass vertical supports 220. The pair of fiberglass sheets 210 may include a top fiberglass sheet 212 and a bottom fiberglass sheet 214. The fiberglass vertical supports 220 may be coupled between the top fiberglass sheet 212 and the bottom fiberglass sheet 214 to form a plurality of internal channels 216. The fiberglass hollow-core sheet 200 may be approximately 2.4 meters long and 1.2 meters wide and in the approximate range of 5 mm to 50 mm in thickness. The fiberglass hollow-core sheet 200 may be produced through a pultrusion process or other suitable process.

While the present invention has been related in terms of the foregoing embodiments, those skilled in the art will recognize that the invention is not limited to the embodiments described. The present invention can be practiced with modification and alteration within the spirit and scope of the appended claims. Thus, the description is to be regarded as illustrative instead of restrictive on the present invention.

## Claims

1. A form work system, comprising:
a pair of hollow-core sheets forming an internal cavity that receives concrete to form a structure;
a plurality of cross-members coupled to the pair of hollow-core sheets to support the pair of hollow-core sheets; and
a pair of vertical supports coupled to the cross-members to further support the cross-members and the pair of hollow-core sheets.

2. The form work system according to claim 1, wherein the structure is a pillar.

3. The form work system according to any of the previous claims, wherein the pair of hollow-core sheets is made of fiberglass.

4. The form work system according to any of the previous claims, wherein the cross-members are made of a material selected from the group consisting of timber, steel or aluminum.

5. The form work system according to any of the previous claims, wherein the pair of vertical supports is coupled to the pair of hollow-core sheets with a plurality of rebar fasteners.

6. The form work system according to claim 5, wherein the rebar fasteners extend through the pair of vertical supports, the pair of hollow-core sheets, the internal cavity and the concrete.

7. The form work system according to claim 5, wherein the rebar fasteners secure the pair of vertical supports, the pair of hollow-core sheets, the internal cavity, the cross-members and the concrete to form the form work system.

8. The form work system according to claim 5, wherein the rebar fasteners secure the pair of vertical supports, the pair of fiberglass hollow-core sheets, the internal cavity, the cross-members and the concrete to form the form work system.

9. The form work system according to any of the previous claims, wherein the pair of vertical supports is made of a material selected from the group consisting of timber, steel or aluminum.

10. A fiberglass hollow-core sheet, comprising:
a pair of fiberglass sheets including a top fiberglass sheet and a bottom fiberglass sheet; and
a plurality of fiberglass vertical supports coupled between the top fiberglass sheet and the bottom fiberglass sheet to form a plurality of internal channels.

11. The fiberglass hollow-core sheet according to claim 10, wherein the fiberglass hollow-core sheet is 2.4 meters long.

12. The fiberglass hollow-core sheet according to claim 10, wherein the fiberglass hollow-core sheet is 1.2 meters wide.

13. The fiberglass hollow-core sheet according to claim 10, wherein the fiberglass hollow-core sheet is in the range of 5 mm to 50 mm in thickness.

14. The fiberglass hollow-core sheet according to claim 10, wherein the fiberglass hollow-core sheet is produced through a pultrusion process.

15. The fiberglass hollow-core sheet according to claim 10, wherein the fiberglass hollow-core sheet is utilized in a form work system.
